# EUROPÄISCHE PATENTSCHRIFT

(11) **EP 3 391 713 B1**
(45) Veröffentlichungstag und Bekanntmachung des Hinweises auf die Patenterteilung: **12.08.2020**
(21) Anmeldenummer: 17729828.8
(22) Anmeldetag: 02.06.2017
(51) Int. Cl.: H05B 47/19, H05B 47/21, H04B 5/00, G06K 19/07, F21S 9/02

(54) **DEZENTRALE PROTOKOLLIERUNG VON BETRIEBSZUSTÄNDEN VON GEBÄUDETECHNIKKOMPONENTEN**
DECENTRALIZED LOGGING OF OPERATING STATE OF TECHNICAL BUILDING COMPONENTS
PROTOCOLISATION DÉCENTRALISÉ DES ÉTATS DE FONCTIONNEMENT DE COMPOSANTS DE LA TECHNIQUE DU BÂTIMENT

(30) Priorität: 13.06.2016 DE 102016210413
(43) Veröffentlichungstag der Anmeldung: 24.10.2018
(73) Patentinhaber: Zumtobel Lighting GmbH, 6850 Dornbirn (AT)
(72) Erfinder: MAYR, Gregor, 6974 Gaißau (AT)
(74) Vertreter: Beder, Jens
(86) Internationale Anmeldenummer: PCT/EP2017/063430
(87) Internationale Veröffentlichungsnummer: WO 2017/215951

(56) Entgegenhaltungen:
- EP-A1- 2 650 820
- EP-A2- 0 949 741
- WO-A1-2006/061254
- WO-A1-2009/112318
- DE-A1-102004 038 512
- DE-A1-102007 036 835
- DE-A1-102011 084 789

## Beschreibung

Die vorliegende Erfindung betrifft eine Steuervorrichtung einer Gebäudetechnikkomponente, die Daten über den Betriebszustand der Gebäudetechnikkomponente erfassen und für eine Protokollierung/Dokumentation ausgeben kann. Die vorliegende Erfindung betrifft genauer eine Steuervorrichtung einer Notleuchte, ein Beleuchtungssystem mit der Notleuchte und einem Lesegerät sowie ein Verfahren zum Erstellen eines Protokolls über einen Betriebszustand.

Gebäude können technische Komponenten, wie Bewegungs- oder Rauchmelder, Leuchten, insbesondere Notleuchten, Aktoren für Tore oder Rauchabzüge, Schalter und Dimmer, aufweisen. Insbesondere Leuchten für die Notbeleuchtung enthalten oft Steuereinrichtungen, welche den Betriebszustand der Leuchte erfassen und Fehlfunktionen oder Betriebsbereitschaft melden. Bei vielen Anwendungen sind in bestimmten Zeitabständen Funktionstests und/oder Betriebsdauertests für die Sicherheitsbeleuchtung und die Ersatzbeleuchtung gesetzlich vorgeschrieben.

Bei einigen Leuchten können diese Prüfungen zur Funktionsfähigkeit manuell mittels eines Tasters an der Leuchte gestartet werden, wobei das Ergebnis optisch durch Kontrollleuchten angezeigt und für einen späteren Nachweis in einem Prüfbuch handschriftlich protokolliert wird. Das Prüfbuch besteht aus den gesammelten Prüfprotokollen, die während der jeweiligen Funktionsprüfung angelegt werden.

Sind die Leuchten zum Beispiel über eine DALI-Schnittstelle (Digital Addressable Lighting Interface) vernetzt und über ein Bussystem mit einer zentralen Steuerung (Controller) verbunden, kann die Prüfung automatisiert durchgeführt und das Prüfbuch in elektronischer Form erstellt werden. Ein solches System ist jedoch teuer und wird meist nur bei großen Beleuchtungssystemen mit sehr vielen Leuchten eingesetzt.

Die manuelle Prüfung ist dagegen aufwändig und wird oft nicht regelmäßig ausgeführt oder nicht wie vorgeschrieben dokumentiert.

Eine Steuervorrichtung gemäß dem Oberbegriff des beigefügten Anspruches 1 ist in der WO 2009/112318 A1 beschrieben.

Eine Übertragungseinrichtung, mittels der Steuerinformationen an einen RFID-Transponder einer Steuervorrichtung übertragen werden, ist in der EP 2 650 820 A1 offenbart.

Die WO 2006/061254 A1 offenbart ein offenbart ein Sicherheits- bzw. Notbeleuchtungssystem, bei dem eine Steuereinrichtung Funksignale für die Durchführung von Funktionsprüfungen an die Sicherheitsleuchten direkt oder mittels Repeater überträgt.

Ein Messgerät, das einen Transponder zum Senden und Empfangen von Daten zur Parametrierung aufweist, ist in der DE 10 2011 084789 A1 beschrieben.

Die DE 10 2007 036835 A1 offenbart ein Verfahren, bei dem Betriebsdaten von einem Gerät in einem Transponder gespeichert und aus dem Transponder im stromlosen Zustand des Geräts gelesen werden.

Ein Netzwerk, in dem eine Vielzahl von Notleuchten und eine Steuereinrichtung miteinander verbunden sind, ist in der EP 0 949 741 A2 beschrieben.

Die DE 10 2004 038 512 A1 offenbart ein System, bei dem eine Leuchte einen Transponder zum Senden einer Identifikationsinformation beim Ein- und/oder Ausschalten der Leuchte aufweist und bei dem ein Empfangsgerät die Identifikationsinformation an eine Steuereinrichtung zur Fernüberwachung weiterleitet.

Der Erfindung liegt die Aufgabe zugrunde, eine Vorrichtung und ein Verfahren anzugeben, die die beschriebenen Probleme verringern. Aufgabe ist es insbesondere, eine Steuervorrichtung, ein Beleuchtungssystem und ein Verfahren bereitzustellen, die eine einfache und kostengünstige Durchführung und Protokollierung von Funktion- und Betriebsdauertests für Notleuchten erlauben.

Diese Aufgabe wird gemäß den Merkmalen der unabhängigen Ansprüche gelöst. Die Erfindung wird durch die Merkmale der abhängigen Ansprüche weitergebildet.

Gemäß der vorliegenden Erfindung weist eine Steuervorrichtung für eine Gebäudetechnikkomponente eine Speichereinrichtung zum Speichern von Protokolldaten über den Betriebszustand der Steuervorrichtung und/oder der Gebäudetechnikkomponente, eine Steuerungseinrichtung zum Erfassen von Daten über den Betriebszustand der Steuervorrichtung bzw. der Gebäudetechnikkomponente zu bestimmten Zeiten, um diese als Protokolldaten in der Speichereinrichtung zu speichern, und eine Schnittstelle zum Herstellen einer Direktverbindung mit einem Lesegerät zum Auslesen der in der Speichereinrichtung gespeicherten Protokolldaten auf.

Die Gebäudetechnikkomponente gemäß der vorliegenden Erfindung ist eine Notleuchte, dessen Betriebszustände zumindest über einen bestimmen Zeitraum dokumentiert/protokolliert werden sollen. Dies können Leuchten für die Sicherheitsbeleuchtung und die Ersatzbeleuchtung sein. Die Steuervorrichtung kann in diesen Geräten integriert oder als ein separates Gerät aufgeführt werden.

Der Betriebszustand kann zusätzlich Messwerte, gesetzte Parameter, und/oder Fehlermeldungen einschließen, die während des Betriebs oder der Bereitschaft der Notleuchte in bestimmten Zeitabständen von der Steuerungseinrichtung erfasst werden. Die Zeitabstände für die Erfassung der Messwerte, Parameter und/oder Fehlermeldungen können unterschiedlich sein und vom Hersteller/Anwender jeweils vorgegeben oder von Messwerten, Parametern, Fehlermeldungen oder nicht zu protokollierenden Ereignissen abhängen.

Gemäß der vorliegenden Erfindung wird der Betriebszustand von der Steuervorrichtung nicht nur erfasst, sondern auch protokolliert, indem die nacheinander, zu unterschiedlichen Zeiten ermittelten Betriebszustände gespeichert werden. Die gespeicherten Daten beinhalten vorzugsweise eine Datums-Zeitinformation bezüglich des Entstehens der Daten. Die gespeicherten Betriebszustände können vom Anwender bei Bedarf ausgelesen werden. Manuelle Prüfungen/Erfassungen oder ein teures Bussystem mit einer zentralen Steuerung sind somit nicht nötig.

Die Schnittstelle für das Auslesen der Protokolldaten kann durch einen Transponder gebildet sein, wobei der Transponder die Speichereinrichtung oder einen Speicher, in welchem die Steuerungseinrichtung die in der Speichereinrichtung gespeicherten Protokolldaten überträgt, aufweist und der Transponder dazu ausgebildet ist die in der Speichereinrichtung bzw. dem Speicher gespeicherten Protokolldaten zumindest im ausgeschalteten Zustand der Steuervorrichtung an das Lesegerät zu übertragen.

Der Transponder kann ein RFID-Transponder oder ein NFC-Transponder sein und/oder eine zumindest dem Transponder zugeordnete Identifizierungs-Information an das Lesegerät senden.

Die Steuerungseinrichtung kann den Energieverbrauch des Betriebsgeräts bzw. der Notleuchte zu den bestimmten Zeiten zu ermitteln und/oder aktuell verwendete Steuerdaten, Informationen über aktuell gesetzte Konfigurierungen der Steuervorrichtung und/oder Funktionsfehler der Steuervorrichtung bzw. der Notleuchte zu den bestimmten Zeiten zu bestimmen.

Die Steuerungseinrichtung kann dazu ausgebildet sein, die Protokolldaten zu komprimieren. So können auch über einen längeren Zeitraum Daten in einem kleinen Speicher gesammelt werden.

Alternativ oder zusätzlich kann die Steuerungseinrichtung dazu ausgebildet sein, Daten von einem externen Sensor zu bestimmten Zeiten zu erfassen und diese als Sensor-Protokolldaten in der Speichereinrichtung zu speichern, wobei die Schnittstelle dazu ausgebildet ist, eine Verbindung mit dem Lesegerät zum Auslesen der in der Speichereinrichtung gespeicherten Sensor-Protokolldaten herzustellen.

Gemäß der vorliegenden Erfindung weist ein Beleuchtungssystem zumindest eine der beschriebenen Steuervorrichtungen und zumindest ein Lesegerät für die Steuervorrichtung auf, wobei das Lesegerät Mittel zum Herstellen der Direktverbindung und zum Auslesen der in der Speichereinrichtung gespeicherten Protokolldaten und eine Steuereinheit aufweist, die dazu ausgebildet ist, ein Protokoll über den Betriebszustand der Steuervorrichtung bzw. der Gebäudetechnikkomponente auf Grundlage der ausgelesenen Protokolldaten zu erstellen oder zu ergänzen.

Das Lesegerät kann einen Datenspeicher zum Speichern von Serviceinformationen, welche bestimmten Funktionsfehlern der Steuervorrichtung bzw. der Gebäudetechnikkomponente zugeordnet sind und eine Anzeige zum Anzeigen der Serviceinformationen aufweisen, wobei die Steuereinheit dazu ausgebildet ist, Funktionsfehler der Steuervorrichtung bzw. der Gebäudetechnikkomponente auf Grundlage der ausgelesenen Protokolldaten zu ermitteln und die auf der Anzeige anzuzeigenden Serviceinformationen auf Grundlage des ermittelten Funktionsfehlers zu bestimmen.

Zusätzlich kann der Datenspeicher dazu ausgebildet sein, eine Vielzahl von Protokollen zu speichern, wobei jeweils ein Protokoll einer Steuervorrichtung bzw. einer Gebäudetechnikkomponente zugeordnet ist und das Lesegerät eine Eingabeeinheit zum Auswählen des auf der Anzeige anzuzeigenden Protokolls aufweist.

Das Lesegerät kann dazu ausgebildet sein, von der Steuervorrichtung für die Steuerung der Gebäudetechnikkomponente aktuell gesetzte Steuerdaten und/oder Informationen über aktuell gesetzte Konfigurierungen zu empfangen oder abzufragen.

Zusätzlich oder alternativ kann das Lesegerät dazu ausgebildet sein, für die Steuerung der Gebäudetechnikkomponente zu setzende Steuerdaten und/oder Informationen über zu setzende Konfigurierungen an die Steuervorrichtung zu senden.

Gemäß der vorliegenden Erfindung weist ein Verfahren zum Erstellen eines Protokolls über den Betriebszustand einer Gebäudetechnikkomponente die folgenden Schritte auf: Beleuchtungssystem mit zumindest einer Steuervorrichtung - Erzeugen von Protokolldaten durch die Gebäudetechnikkomponente durch Erfassen und Speichern von Daten über den Betriebszustand der Gebäudetechnikkomponente zu bestimmten Zeiten,
- Übertragen der Protokolldaten an ein Lesegerät mittels einer Direktverbindung zwischen der Gebäudetechnikkomponente und dem Lesegerät, und
- Erstellen des Protokolls auf Grundlage der übertragenen Protokolldaten, wobei die Gebäudetechnikkomponente eine Notleuchte ist und für die Erfassung der Daten über den Betriebszustand in regelmäßigen Zeitabständen ein Funktionstest und ein Betriebsdauertest auf Grundlage eines von einem internen Zeitmesser oder Zeitgeber erzeugten Zeitsignals durchgeführt wird. Der Zeitabstand zwischen zwei aufeinanderfolgenden Betriebsdauertests ist länger als der Zeitabstand zwischen zwei aufeinanderfolgenden Funktionstests und Testergebnisse und Fehlermeldungen eines jeden Funktions- und Betriebsdauertests werden nach Testende automatisch in der Speichereinrichtung gespeichert, wobei jedem Funktions- und Betriebsdauertest eine fortlaufende, eindeutige Nummer, der Zeitwert des Zeitsignals zum Testende und/oder das Datum und/oder die Uhrzeit des Tests zugeordnet wird.

Vorteilhaft können in dem Verfahren zwei oder mehr Gebäudetechnikkomponenten unabhängig voneinander jeweils Protokolldaten erzeugen, die erzeugten Protokolldaten mittels einer jeweiligen Direktverbindung an das Lesegerät übertragen werden und für jede Gebäudetechnikkomponente ein Protokoll auf Grundlage der jeweiligen Protokolldaten erstellt werden.

Das Verfahren kann zusätzlich die Schritte:
- Ermitteln eines Funktionsfehlers einer Gebäudetechnikkomponente auf Grundlage der übertragenen Protokolldaten und
- Ausgeben der dem ermittelten Funktionsfehler zugeordneten Serviceinformationen aufweisen.

Nachfolgend wird die Erfindung anhand der beiliegenden Zeichnungen näher erläutert. Es zeigen:
Fig. 1 ein erstes Ausführungsbeispiel eines Beleuchtungssystems mit einer Steuervorrichtung und einem Lesegerät erster Ausführung gemäß der vorliegenden Erfindung, und
Fig. 2 ein zweites Ausführungsbeispiel eines Beleuchtungssystems gemäß der vorliegenden Erfindung.

Komponenten mit gleichen Funktionen sind in den Figuren mit gleichen Bezugszeichen gekennzeichnet.

Für alle Ausführungen im Zusammenhang mit der vorliegenden Erfindung wird einheitlich der Begriff des "Steuerns" verwendet. Dies umfasst aber auch sämtliche Formen der Regelung.

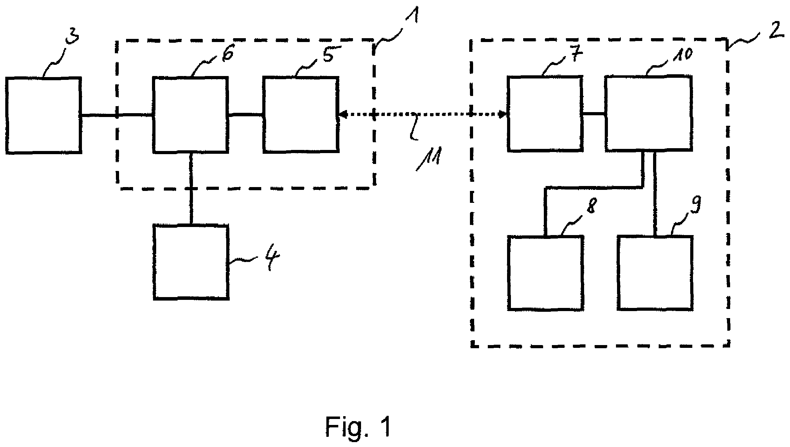

Fig. 1 zeigt eine vereinfachte schematische Darstellung eines Notbeleuchtungssystems mit einer Steuervorrichtung 1 und einem mobilen Lesegerät 2 gemäß der vorliegenden Erfindung. Die beispielhaft mit einem CO₂- und Luftfeuchte-Sensor 3 verbundene Steuervorrichtung 1 ist erfindungsgemäß ein Betriebsgerät zum Betreiben eines Leuchtmittels 4 mit einem Akkumulator und einer Ladeeinrichtung für den Akkumulator (nicht gezeigt). Das Leuchtmittel 4 und die Steuervorrichtung 1 können in einem Gerät, zum Beispiel einer Notleuchte, integriert sein. Die Steuervorrichtung 1 kann ein Konstantstrom-Konverter, z.B. ein LED-Konverter sein, der aus einer Netzspannung (nicht gezeigt) oder der im Akkumulator gespeicherten Energie einen für den Betrieb von LEDs (Leuchtmittel 4) nötigen Strom erzeugt.

Die Steuervorrichtung 1 weist einen Transponder 5 und eine Steuerungseinrichtung 6 auf. Die Steuerungseinrichtung 6 kann mit dem Transponder 5 über einen seriellen Datenbus I²C (Inter-Integrated Circuit) verbunden sein, eine integrierte Halbleiterschaltung sein oder eine integrierte Halbleiterschaltung umfassen. Die Steuerungseinrichtung 6 kann als ein Prozessor, ein Mikroprozessor, ein Controller, ein Mikrocontroller oder eine anwendungsspezifische Spezialschaltung (ASIC) oder eine Kombination der genannten Einheiten ausgestaltet sein.

Die Steuerungseinrichtung 6 führt auf Grundlage eines von einem internen Zeitmesser oder Zeitgeber erzeugten Zeitsignals in regelmäßigen Zeitabständen einen Funktionstest (Wochen-/Monatstest) und einen Betriebsdauertest (Haupttest) durch, wobei der Zeitabstand zwischen zwei aufeinanderfolgenden Betriebsdauertests länger als der Zeitabstand zwischen zwei aufeinanderfolgenden Funktionstests ist.

Bei dem ca. zwei Minuten dauernden Funktionstest prüft Steuerungseinrichtung 6 die Funktion des Akkumulators, des Leuchtmittels 4, der in dem Betriebsgerät enthaltenen Ladeeinrichtung und des dem Betriebsgerät enthaltenen Wechselrichters. Zusätzlich zu den im Funktionstest geprüften Funktionen ermittelt die Steuerungseinrichtung 6 im Betriebsdauertest die Kapazität des Akkumulators, indem das Leuchtmittel 4 bzw. die Notleuchte über 2/3 ihrer Nennbetriebsdauer von z.B. einer oder drei Stunden mit dem Akkumulator betrieben wird.

Die Testergebnisse und Fehlermeldungen eines jeden Funktions- und Betriebsdauertests (Daten über den Betriebszustand zum jeweiligen Testzeitpunkt) werden nach Testende automatisch in einer nichtflüchtigen Speichereinrichtung der Steuervorrichtung 1 gespeichert, wobei jedem Funktions- und Betriebsdauertest (Datensatz) eine fortlaufende, eindeutige Nummer, der Zeitwert des Zeitsignals zum Testende und/oder das Datum und/oder die Uhrzeit des Tests zugeordnet wird. Die von mindestens einem, bevorzugt mehreren Tests in der Speichereinrichtung gespeicherten Daten stellen Protokolldaten über den Betriebszustand der Steuervorrichtung bzw. der Notleuchte dar.

Die Speichereinrichtung kann ein der Steuervorrichtung 1 bzw. der Notleuchte entnehmbarer Speicher (z.B. eine Speicherkarte) oder ein Speicher des Transponders 5 sein, der auch im ausgeschalteten Zustand der Steuervorrichtung 1 von dem Lesegerät 2 lesbar ist. Der aus der Steuervorrichtung 1 bzw. der Notleuchte entnommene Speicher könnte zum Auslesen der gespeicherten Daten in das Lesegerät eingesetzt werden und somit als Schnittstelle zwischen der Steuervorrichtung 1 und dem Lesegerät 2 dienen.

Die Steuervorrichtung 1 kann die in der Speichereinrichtung gespeicherten Datensätze komprimieren, um die Anzahl der speicherbaren Tests zu erhöhen. Es ist auch möglich, dass beim Erreichen einer bestimmten Speicherauslastung der Speichereinrichtung oder beim Erreichen einer bestimmten Anzahl von ausgeführten Funktions- und/oder Betriebsdauertests die ältesten gespeicherte Datensätze oder bestimmte Teile davon mit niedriger Priorität gelöscht werden, um Speicherplatz für die Daten des neuesten Funktions- und/oder Betriebsdauertests zu gewinnen. Ein Datensatz enthält die Ergebnisse eines Funktions- oder Betriebsdauertests, d.h., Informationen über den Betriebszustand zum Zeitpunkt des Tests.

Zumindest einige der Testergebnisse und/oder Fehlermeldungen des aktuellsten Tests könnten zusätzlich optisch mittels an der Steuervorrichtung 1 bzw. der Notleuchte angebrachten Kontrollleuchten (Status-LEDs) angezeigt werden.

Das Lesegerät 2 dient dazu, die von der Steuervorrichtung 1 erzeugten und gespeicherten Daten auszulesen und aus den Daten ein Protokoll zu erstellen. Das Lesegerät 2 weist eine Sende- und Empfangseinheit 7 zum Senden und Empfangen von Daten zu/von dem Transponder 5, eine Anzeigeeinheit 8 zum Anzeigen der zu sendenden und/oder empfangenen Daten, eine Eingabeeinheit 9 zum Eingeben, Ändern und/oder Auswählen der Daten und eine mit der Sende- und Empfangseinheit 7, der Anzeigeeinheit 8 und der Eingabeeinheit 9 verbundene Steuereinheit 10 auf. Die Eingabeeinheit 9 kann in der Anzeigeeinheit 8 integriert sein (berührungsempfindlicher Bildschirm). Alternativ oder zusätzlich zu dem Transponder 5 kann das Lesegerät 2 eine Lesevorrichtung zum Auslesen der auf dem entnehmbaren Speicher bzw. der Speicherkarte gespeicherten Daten enthalten.

Für den mobilen Einsatz ist das Lesegerät 2 mit einer internen Batterie (nicht gezeigt) ausgerüstet. Diese liefert auch die Energie für den Transponder 5, so dass Lese- und Schreibvorgänge auch ausgeführt werden können, wenn die Steuervorrichtung 1 nicht mit einer Netzspannung versorgt ist und auch selbst keine eigene Stromquelle besitzt, bzw. diese defekt ist oder eine Leistungsunterbrechung vorliegt.

Die Sende- und Empfangseinheit 7 stellt zu dem Transponder 5 eine drahtlose, direkte Verbindung 11 her. Für eine solche Kopplung/Verbindung erzeugt die Sende- und Empfangseinheit 7 magnetische Wechselfelder mit geringer Reichweite oder hochfrequente Radiowellen, wodurch der (passive) Transponder 5 mit Energie versorgt wird.

Die Steuereinheit 10 ist ein Prozessor, auf dem eine Software (Mikroprogramm oder Anwendungssoftware, App) ausführbar ist, die den Lese- und Schreibprozess und die Erstellung eines Protokolls bzw. des Prüfbuchs aus den Protokolldaten steuert. Ist bei der Protokollierung in der Steuervorrichtung 1 jedem Test bzw. Datensatz nur eine fortlaufende Nummer oder ein Zeitwert des internen Zeitsignals zugewiesen worden, ermittelt die Steuereinheit 10 bzw. die Software zu jedem Datensatz die zugehörige Uhrzeit und/oder das Datum, wobei ein Umrechnen/Abgleich der Testzyklen bzw. des Zeitsignals der Steuervorrichtung 1 auf die reale Zeit erfolgt. Bei Auslesen von mehreren unterschiedlichen Geräten mit unterschiedlicher interner Zeitbasis kann so dennoch ein für alle Geräte einheitliches Prüfbuch bzw. allgemeines Protokoll erstellt werden.

Nach dem Zuweisen der Uhrzeit und/oder des Datums vergleicht die Steuereinheit 10 mittels der Uhrzeit und/oder dem Datum die aktuell ausgelesenen Datensätze mit älteren, gespeicherten Datensätzen und ergänzt die gespeicherten Datensätze durch ausgelesene Datensätze, welche von dem Lesegerät bisher nicht erfasst/gespeichert sind. Aus den vervollständigten Datensätzen erzeugt die Steuereinheit 10 das Protokoll bzw. Prüfbuch, um es an einen Drucker auszugeben und/oder auf der Anzeigeeinheit 8 anzuzeigen, oder auch zur Weiterleitung an einen zentralen Rechner.

Das Protokoll kann eine Tabelle sein, in der über die Zeit in jeweils einer Spalte die Ergebnisse (Werte) der Funktionstests des Akkumulators, der Funktionstests des Leuchtmittels 4, der Funktionstests der in dem Betriebsgerät enthaltenen Ladeeinrichtung, der Funktionstests des in dem Betriebsgerät enthaltenen Wechselrichters und die Ergebnisse (Werte) der Kapazitätstests des Akkumulators eingetragen sind. Die Präsentation der Ergebnisse in der Tabelle kann auch durch eine graphische Darstellung der oben genannten Status-LED mit dem jeweiligen Blinkmuster oder einer Ampel mit den Farben rot (Test nicht bestanden), gelb (Test gerade noch bestanden), grün (Test bestanden) erfolgen.

Zusätzlich zum Betriebszustand können auch betriebsfremde Werte und Ereignisse, wie Umgebungstemperatur, Luftfeuchte, CO₂-Gehalt oder Anwesenheit von Personen, von der Steuervorrichtung 1 erfasst und protokolliert werden. In dem in Fig. 1 gezeigten Beleuchtungssystem erfasst und speichert die Steuervorrichtung 1 in bestimmten zeitlichen Abständen die von dem CO₂- und Luftfeuchte-Sensor 3 abgegebenen Werte für den CO₂-Gehalt und die Luftfeuchte. Die so protokollierten Werte können von dem Lesegerät 2 für eine Analyse/Anpassung einer Steuerung des Lüftungssystems ausgelesen werden, wobei die Steuereinheit 10 den zeitlichen Verlauf der Werte eines Tages analysiert und bei einem Über- oder Unterschreiten von Grenzwerten die Steuerung bzw. das Steuerprogramm des Lüftungssystem für die Zeiten, an denen die Grenzwerte nicht eingehalten werden, entsprechend korrigiert.

Über die drahtlose Verbindung 11 überträgt das Lesegerät 2 auch Daten für die Parametrierung/Konfiguration der Notleuchte, welche in einem Speicher (nicht gezeigt) des Transponders 5 abgespeichert werden. Die Datenübertragung kann im stromlosen Zustand der Steuervorrichtung 1 erfolgen. Wird die Steuervorrichtung 1, zum Beispiel bei der Inbetriebnahme, mit Strom versorgt, liest die Steuerungseinrichtung 6 die gespeicherten Daten aus dem Speicher des Transponders 5 aus und parametriert/konfiguriert das Betriebsgerät entsprechend der ausgelesenen Daten.

Notleuchten werden meist in Dauerschaltung (bei Netzbetrieb EIN) oder in Bereitschaftsschaltung (bei Netzbetrieb AUS, nur bei Stromausfall EIN) betrieben. Das Auswählen/Konfigurieren von Dauerschaltung oder Bereitschaftsschaltung kann mittels der Eingabeeinheit 9 des Lesegeräts 2 durch den Anwender erfolgen, wobei entsprechende Daten von der Steuereinheit 10 erzeugt und von der Sende- und Empfangseinheit 7 an den Transponder 5 gesendet werden. Nach der Inbetriebnahme oder während des Betriebs liest die Steuerungseinrichtung 6 der Steuervorrichtung 1 die aktuell gesetzten Steuerdaten (Betriebsparameter) aus dem Speicher des Transponders 5 aus.

Der Transponder 5 kann ein RFID-Transponder, insbesondere ein auf der RFID-Technologie basierender NFC-Transponder sein, der ein spezielles Kopplungsverfahren nutzt, dass auf gesonderte Frequenzbereiche und eine Kommunikation auf kurze Entfernung genormt ist. Der Transponder 5 kann ein passiver Transponder sein, der von dem Lesegerät 2 aus für eine Kommunikation mit Energie versorgt wird. In dem Transponder 5 können Daten in einem nicht flüchtigen, wiederbeschreibbaren Speicher gespeichert werden, die über die Verbindung 11 nur gelesen werden können (R/O) sowie Daten, die über die Verbindung 11 sowohl gelesen als auch überschrieben/geändert werden können (R/W).

Zur Erhöhung der Sicherheit, insbesondere, damit keine unbefugten Personen Daten an die Steuervorrichtung 1 senden oder abfragen können, kann vor der Datenübertragung eine gegenseitige Authentifizierung durchgeführt werden.

Es ist auch möglich zumindest einige der zu übertragenden Daten zu verschlüsseln bzw. mit verschiedenen Schlüsseln zu verschlüsseln. Diese müssen dann von der Steuervorrichtung 1 bzw. dem Lesegerät 2 entschlüsselt werden.

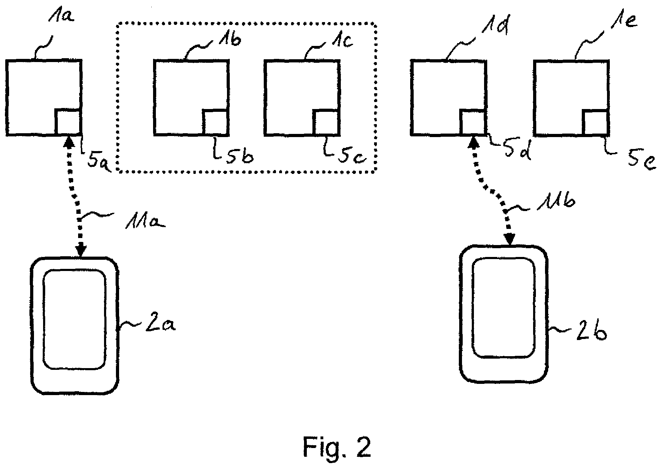

Fig. 2 zeigt in einem Ausschnitt ein zweites Ausführungsbeispiel eines Beleuchtungssystems gemäß der vorliegenden Erfindung. Das in Fig. 2 gezeigte Beleuchtungssystem enthält zwei Lesegeräte 2a, 2b und eine Vielzahl von Gebäudetechnikkomponenten 1a..1e, die Sensoren, Leuchten oder Aktoren, Schalter und/oder Dimmer sein können und über kein Bussystem oder kein Netzwerk zur Datenübertragung miteinander verbunden sind.

Jede Gebäudetechnikkomponente 1a..1e weist einen Transponder 5a..5e, der mit den Lesegeräten 2a und 2b Daten austauschen kann und eine Steuerungsvorrichtung 1 (nicht gezeigt) zum Steuern der jeweiligen Komponente 1a..1h auf. Die Gebäudetechnikkomponenten 1b und 1c sind in dem gleichen Raum, die anderen Gebäudetechnikkomponenten 1a, 1b, und 1e in verschiedenen Räumen eines Gebäudes angeordnet.

Die Lesegeräte 2a und 2b werden in dem gezeigten Beispiel dazu verwendet, die in den Gebäudetechnikkomponenten 1a..1e protokollierten Betriebszustände auszulesen und Protokolle/Prüfbücher zu erstellen, wobei ein lokales Prüfbuch für jede Gebäudetechnikkomponente 1a..1e, ein Raum-Prüfbuch, in dem Gebäudetechnikkomponenten la..le eines Raumes zusammengefasst sind, und/oder ein zentrales Prüfbuch, in dem Gebäudetechnikkomponenten la..le erfasst sin, erstellt werden kann. Für die Erstellung des zentralen Prüfbuchs tauschen die Lesegeräte 2a und 2b untereinander die ausgelesenen, protokollierten Betriebszustände aus.

Alternativ können die ausgelesenen protokollierten Betriebszustände von jedem der Lesegeräte 2a und 2b in einem Rechnernetz (Cloud) oder Server, auf das/den zumindest ein Lesegerät 2a, 2b zugreifen kann, gespeichert werden. Dieses Lesegerät 2a, 2b könnte auch als Smartphone ausgeführt sein, welches die für die Erstellung des zentralen Prüfbuchs fehlenden Daten von dem Rechnernetz (Cloud) oder Server abfragt und/oder erstellte Protokolle dort speichert.

Die beschriebenen Ausgestaltungen, wie zum Beispiel die Verschlüsselung oder Authentifizierung, sind nicht auf das jeweilige Ausführungsbeispiel beschränkt und können auch auf andere der beschriebenen Ausführungsbeispiele angewendet werden.

Die Verbindung zwischen der Steuervorrichtung 1 und dem Lesegerät 2 zur Übertragung der protokollierten Betriebszustände kann auch mittels einer Kabelverbindung u (Schnittstelle Mikro-USB oder Lightning Interface) oder über eine Funkverbindung (z.B. Bluetooth) erfolgen.

## Patentansprüche

1. Steuervorrichtung für eine Gebäudetechnikkomponente (1a..1e), wobei die Gebäudekomponente eine Notleuchte ist und wobei die Steuervorrichtung aufweist:
eine Speichereinrichtung, die dazu ausgebildet ist, Protokolldaten über den Betriebszustand der Steuervorrichtung (1) und/oder der Gebäudetechnikkomponente (1a..1e) zu speichern;
eine Steuerungseinrichtung (6), die dazu ausgebildet ist, Daten über den Betriebszustand der Steuervorrichtung (1) bzw. der Gebäudetechnikkomponente (1a..1e) zu bestimmten Zeiten zu erfassen und diese als Protokolldaten in der Speichereinrichtung zu speichern; und
eine Schnittstelle (5), die dazu ausgebildet ist, eine Direktverbindung mit einem Lesegerät (2) zum Auslesen der in der Speichereinrichtung gespeicherten Protokolldaten herzustellen,
**dadurch gekennzeichnet, dass**
die Steuerungseinrichtung (6) dazu ausgebildet ist, für die Erfassung der Daten über den Betriebszustand auf Grundlage eines von einem internen Zeitmesser oder Zeitgeber erzeugten Zeitsignals in regelmäßigen Zeitabständen einen Funktionstest und einen Betriebsdauertest durchzuführen, wobei der Zeitabstand zwischen zwei aufeinanderfolgenden Betriebsdauertests länger als der Zeitabstand zwischen zwei aufeinanderfolgenden Funktionstests ist; und
die Steuerungseinrichtung (6) dazu ausgebildet ist, Testergebnisse und Fehlermeldungen eines jeden Funktions- und Betriebsdauertests nach Testende automatisch in der Speichereinrichtung zu speichern, wobei jedem Funktions- und Betriebsdauertest eine fortlaufende, eindeutige Nummer, der Zeitwert des Zeitsignals zum Testende und/oder das Datum und/oder die Uhrzeit des Tests zugeordnet wird.

2. Steuervorrichtung nach Anspruch 1,
**dadurch gekennzeichnet, dass**
die Schnittstelle (5) durch einen Transponder (5) gebildet ist, wobei
der Transponder (5) die Speichereinrichtung oder einen Speicher, in welchen die Steuerungseinrichtung (6) die in der Speichereinrichtung gespeicherten Protokolldaten überträgt, aufweist; und
der Transponder (5) dazu ausgebildet ist, die in der Speichereinrichtung bzw. dem Speicher gespeicherten Protokolldaten zumindest im ausgeschalteten Zustand der Steuervorrichtung (1) an das Lesegerät (2) zu übertragen.

3. Steuervorrichtung nach Anspruch 1 oder 2,
**dadurch gekennzeichnet, dass**
die Steuerungseinrichtung (6) dazu ausgebildet ist, für die Erfassung der Daten über den Betriebszustand zusätzlich den Energieverbrauch der Steuervorrichtung (1) bzw. der Gebäudetechnikkomponente (1a..1e) zu den bestimmten Zeiten zu ermitteln und/oder aktuell verwendete Steuerdaten, Informationen über aktuell gesetzte Konfigurierungen der Steuervorrichtung (1) zu den bestimmten Zeiten zu bestimmen.

4. Steuervorrichtung nach einem der Ansprüche 1 bis 3, **dadurch gekennzeichnet, dass**
die Steuerungseinrichtung (6) dazu ausgebildet ist, die Protokolldaten zu komprimieren.

5. Steuervorrichtung nach einem der Ansprüche 1 bis 4, **dadurch gekennzeichnet, dass**
die Steuerungseinrichtung (6) dazu ausgebildet ist, Daten von einem externen Sensor (3) zu bestimmten Zeiten zu erfassen und diese als Sensor-Protokolldaten in der Speichereinrichtung zu speichern; und
die Schnittstelle (5) dazu ausgebildet ist, eine Verbindung mit dem Lesegerät (2) zum Auslesen der in der Speichereinrichtung gespeicherten Sensor-Protokolldaten herzustellen.

6. Beleuchtungssystem mit zumindest einer Steuervorrichtung (1) nach einem der Ansprüche 1 bis 5 und zumindest einem Lesegerät für die Steuervorrichtung, **dadurch gekennzeichnet, dass** das Lesegerät aufweist:
Mittel (7) zum Herstellen der Direktverbindung und zum Auslesen der in der Speichereinrichtung gespeicherten Protokolldaten; und
eine Steuereinheit (10), die dazu ausgebildet ist, ein Protokoll über den Betriebszustand der Steuervorrichtung (1) bzw. der Gebäudetechnikkomponente (1a..1e) auf Grundlage der ausgelesenen Protokolldaten zu erstellen oder zu ergänzen.

7. Beleuchtungssystem nach Anspruch 6, **dadurch gekennzeichnet, dass** das Lesegerät aufweist:
einen Datenspeicher zum Speichern von Serviceinformationen, welche bestimmten Funktionsfehlern der Steuervorrichtung (1) bzw. der Gebäudetechnikkomponente (1a..1e) zugeordnet sind; und
eine Anzeige (8) zum Anzeigen der Serviceinformationen; wobei
die Steuereinheit (10) dazu ausgebildet ist, Funktionsfehler der Steuervorrichtung (1) bzw. der Gebäudetechnikkomponente (1a..1e) auf Grundlage der ausgelesenen Protokolldaten zu ermitteln und die auf der Anzeige (8) anzuzeigenden Serviceinformationen auf Grundlage des ermittelten Funktionsfehlers zu bestimmen.

8. Beleuchtungssystem nach Anspruch 7, **dadurch gekennzeichnet, dass**
das Beleuchtungssystem eine Vielzahl von Steuervorrichtungen (1) aufweist;
der Datenspeicher dazu ausgebildet ist, eine Vielzahl von Protokollen entsprechend der Vielzahl von Steuervorrichtungen (1) zu speichern, wobei jeweils ein Protokoll einer Steuervorrichtung (1) bzw. einer Gebäudetechnikkomponente (1a..1e) zugeordnet ist; und das Lesegerät
eine Eingabeeinheit (9) zum Auswählen des auf der Anzeige (8) anzuzeigenden Protokolls aufweist.

9. Beleuchtungssystem nach einem der Ansprüche 6 bis 8, **dadurch gekennzeichnet, dass**
die Steuervorrichtung (1) dazu ausgebildet ist, die Steuerung der Gebäudetechnikkomponente (1a..1e) auf Grundlage von gesetzten Steuerdaten und/oder gesetzten Konfigurierungen durchzuführen; und
das Lesegerät (2) dazu ausgebildet ist, von der Steuervorrichtung (1) die aktuell gesetzten Steuerdaten und/oder Informationen über aktuell gesetzte Konfigurierungen zu empfangen oder abzufragen.

10. Beleuchtungssystem nach einem der Ansprüche 6 bis 9, **dadurch gekennzeichnet, dass**
das Lesegerät (2) dazu ausgebildet ist, für die Steuereinheit (10) der Gebäudetechnikkomponente (1a..1e) zu setzende Steuerdaten und/oder Informationen über zu setzende Konfigurierungen an die Steuervorrichtung (1) zu senden; und
die Steuervorrichtung (1) dazu ausgebildet ist, die Steuerung der Gebäudetechnikkomponente (1a..1e) auf Grundlage der empfangenen Steuerdaten und/oder der empfangenen Konfigurierungen durchzuführen.

11. Verfahren zum Erstellen eines Protokolls über den Betriebszustand zumindest einer Gebäudetechnikkomponente (1a..1e), wobei die Gebäudetechnikkomponente eine Notleuchte ist, mit den Schritten:
Erzeugen von Protokolldaten durch die Gebäudetechnikkomponente (1a..1e) durch Erfassen und Speichern von Daten über den Betriebszustand der Gebäudetechnikkomponente zu bestimmten Zeiten;
Übertragen der Protokolldaten an ein Lesegerät (2) mittels einer Direktverbindung zwischen der Gebäudetechnikkomponente (1a..1e) und dem Lesegerät (2); und
Erstellen des Protokolls auf Grundlage der übertragenen Protokolldaten,
**dadurch gekennzeichnet, dass**
für die Erfassung der Daten über den Betriebszustand in regelmäßigen Zeitabständen ein Funktionstest und ein Betriebsdauertest auf Grundlage eines von einem internen Zeitmesser oder Zeitgeber erzeugten Zeitsignals durchgeführt wird, wobei der Zeitabstand zwischen zwei aufeinanderfolgenden Betriebsdauertests länger als der Zeitabstand zwischen zwei aufeinanderfolgenden Funktionstests ist; und
Testergebnisse und Fehlermeldungen eines jeden Funktions- und Betriebsdauertests nach Testende automatisch in der Speichereinrichtung gespeichert werden, wobei jedem Funktions- und Betriebsdauertest eine fortlaufende, eindeutige Nummer, der Zeitwert des Zeitsignals zum Testende und/oder das Datum und/oder die Uhrzeit des Tests zugeordnet wird.

12. Verfahren nach Anspruch 11, **dadurch gekennzeichnet, dass**
zwei oder mehr Gebäudetechnikkomponenten gemäß Anspruch 11 unabhängig voneinander jeweils Protokolldaten erzeugen;
die erzeugten Protokolldaten mittels einer jeweiligen Direktverbindung an das Lesegerät (2) übertragen werden; und
für jede Gebäudetechnikkomponente (1a..1e) ein Protokoll auf Grundlage der jeweiligen Protokolldaten erstellt wird.

13. Verfahren nach Anspruch 13 oder 14, **dadurch gekennzeichnet, dass** das Verfahren zusätzlich die Schritte aufweist:
Ermitteln eines Funktionsfehlers der bzw. einer der Gebäudetechnikkomponenten (n) (1a..1e) auf Grundlage der übertragenen Protokolldaten; und
Ausgeben von dem ermittelten Funktionsfehler zugeordneten Serviceinformationen.

## Claims

1. Control device for a building services component (1a..1e), wherein the building component is an emergency light, and wherein the control device comprises:
a storage device, which is designed to store protocol data about the operating state of the control device (1) and/or about the building services component (1a. .1e);
a control device (6), which is designed to record data about the operating state of the control device (1) or about the building services component (1a..1e) at specific times, and to store such data as protocol data in the storage device; and
an interface (5), which is designed to establish a direct connection with a reader (2) for reading out the protocol data stored in the storage device,
**characterized in that**
the control device (6) is designed to implement a function test and an operational duration test for the acquisition of the data about the operating state at regular time intervals on the basis of a time signal generated by an internal timer or time generator, wherein the time interval between two successive operating duration tests is longer than the time interval between two successive function tests; and
after the end of testing, the control device (6) is designed to automatically store test results and error messages of each function and operating duration test in the storage device, wherein a sequential unique number, the time value of the time signal at the test end, and/or the date and/or the time of the test is associated with each function and operating duration test.

2. Method according to claim 1,
**characterized in that**
the interface (5) is formed by a transponder (5), wherein
the transponder (5) comprises the storage device, or a memory into which the control device (6) transfers the protocol data stored in the storage device; and
the transponder (5) is designed to transfer the protocol data stored in the storage device or in the memory to the reader (2) at least in the deactivated state of the control device (1).

3. Control device according to claims 1 or 2,
**characterized in that**
for the acquisition of data about the operating state, the control device (6) is designed to additionally determine the power consumption of the control device (1) or of the building services component (1a..1e) at the determined times, and/or to determine currently used control data, information about currently set configurations of the control device (1) at the determined times.

4. Control device according to any one of claims 1 to 3, **characterized in that**
the control device (6) is designed to compress the protocol data.

5. Control device according to any one of claims 1 to 4, **characterized in that**
the control device (6) is designed to acquire data from an external sensor (3) at specific times and to store such data as sensor protocol data in the storage device; and
the interface (5) is designed to establish a connection with the reader (2) in order to read out the sensor protocol data stored in the storage device.

6. Illumination system having at least one control device (1) according to any one of claims 1 to 5 and at least one reader for the control device, **characterized in that** the reader comprises:
means (7) for establishing the direct connection and for reading out the protocol data stored in the storage device; and
a control unit (10), which is designed to create or supplement a protocol relating to the operating state of the control device (1) or of the building services component (1a..1e), on the basis of the protocol data read out.

7. Illumination system according to claim 6, **characterized in that** the reader comprises:
a data memory for storing service information which is associated with specific function errors of the control device (1) or of the building services component (1a..1e); and
a display (8) for displaying the service information; wherein
the control unit (10) is designed to determine function errors of the control device (1) or of the building services component (1a..1e) on the basis of the read-out protocol data, and to determine the service information to be displayed on the display (8) on the basis of the determined function error.

8. Illumination system according to claim 7, **characterized in that**
the illumination system comprises a plurality of control devices (1);
the data storage is designed to store a plurality of protocols corresponding to the plurality of control devices (1), wherein in each case a protocol is associated with a control device (1) or a building services component (1a..1e); and the reader
has an input unit (9) for selecting the protocol to be displayed on the display (8).

9. Illumination system according to any one of claims 6 to 8, **characterized in that**
the control device (1) is designed to implement the control of the building services component (1a..1e) on the basis of set control data and/or set configurations; and
the reader (2) is designed to receive or query from the control device (1) the currently set control data and/or information about currently set configurations.

10. Illumination system according to any one of claims 6 to 9, **characterized in that**
the reader (2) is designed to send control data and/or information about configurations to be set to the control device (1) for the control unit (10) of the building services component (1a..1e); and
the control device (1) is designed to implement the control of the building services component (1a..1e) on the basis of the received control data and/or the received configurations.

11. Method for creating a protocol relating to the operating state of at least one building services component (1a..1e), wherein the building services component is an emergency lamp, comprising the steps of:
generation of protocol data by the building services component (1a..1e) by acquiring and storing data about the operating state of the building services component at specific times;
transferring the protocol data to a reader (2) by means of a direct connection between the building services component (1a..1e) and the reader (2); and
creating the protocol on the basis of the transferred protocol data,
**characterized in that**
for the acquisition of data about the operating state at fixed time intervals, a function test and an operating duration test are carried out on the basis of a time signal generated by an internal timer or time generator, wherein the time interval between two consecutive operating duration tests is longer than the time interval between two successive function tests; and
after the end of testing, test results and error messages of each function and operating duration test are automatically stored in the storage device, wherein a sequential unique number, the time value of the time signal at the test end, and/or the date and/or time of the test is associated with each function and operating duration test.

12. Method according to claim 11, **characterized in that**
two or more building services components according to claim 11 in each case generate protocol data independently of one another;
the generated protocol data is transferred to the reader (2) by means of a respective direct connection; and
a protocol is established for each building services component (1a..1e) on the basis of the respective protocol data.

13. Method according to claims 13 or 14, **characterized in that** the method additionally comprises the steps of:
determining a function error of the building services component or components (1a..1e) on the basis of the transferred protocol data; and
outputting service information associated with the determined function error.

## Revendications

1. Dispositif de commande d'un composant de la technique du bâtiment (1a.. 1e), le composant de bâtiment étant un éclairage de secours et le dispositif de commande comprenant :
un dispositif de stockage, qui est conçu pour stocker des données de protocole sur l'état de fonctionnement du dispositif de commande (1) et/ou du composant de la technique du bâtiment (1a.. 1e) ;
un dispositif de commande (6), qui est conçu pour détecter des données sur l'état de fonctionnement du dispositif de commande (1) ou du composant de la technique du bâtiment (1a .. 1e) à certains moments et pour stocker lesdites données comme données de protocole dans le dispositif de stockage ; et
une interface (5), qui est conçue pour établir une connexion directe avec un appareil de lecture (2) pour lire les données de protocole stockées dans le dispositif de stockage,
**caractérisé en ce que**
le dispositif de commande (6) est conçu pour effectuer, pour la détection des données sur l'état de fonctionnement, sur la base d'un signal temporel généré par un chronomètre ou une horloge interne, un test de fonction et un test de durée de fonctionnement à intervalles réguliers, l'intervalle entre deux tests de durée de fonctionnement successifs étant plus long que l'intervalle entre deux tests de fonction consécutifs ; et
le dispositif de commande (6) est conçu pour stocker automatiquement, dans le dispositif de stockage, les résultats de test et les messages d'erreur de chaque test de fonction et de durée de fonctionnement à la fin du test, un numéro séquentiel unique, la valeur temporelle du signal temporel à la fin du test et/ou la date et/ou l'heure du test étant attribué(e)(s) à chaque test de fonction et de durée de fonctionnement.

2. Dispositif de commande selon la revendication 1,
**caractérisé en ce que**
l'interface (5) est formée par un transpondeur (5),
le transpondeur (5) comprenant le dispositif de stockage ou une mémoire à laquelle le dispositif de commande (6) transmet les données de protocole stockées dans le dispositif de stockage ; et
le transpondeur (5) est conçu pour transmettre les données de protocole stockées dans le dispositif de mémoire ou dans la mémoire au dispositif de lecture (2), au moins lorsque le dispositif de commande (1) est éteint.

3. Dispositif de commande selon la revendication 1 ou 2,
**caractérisé en ce que**
le dispositif de commande (6) est conçu, pour la détection des données sur l'état de fonctionnement, pour en plus déterminer la consommation d'énergie du dispositif de commande (1) ou du composant de la technique du bâtiment (1a .. 1e) aux moments définis et/ou pour définir des données de commande actuellement utilisées, des informations sur les configurations actuellement définies du dispositif de commande (1) aux moments définis.

4. Dispositif de commande selon l'une quelconque des revendications 1 à 3, **caractérisé en ce que**
le dispositif de commande (6) est conçu pour compresser les données de protocole.

5. Dispositif de commande selon l'une quelconque des revendications 1 à 4, **caractérisé en ce que**
le dispositif de commande (6) est conçu pour détecter des données d'un capteur externe (3) à certains moments et pour les stocker comme données de protocole du capteur dans le dispositif de stockage ; et
l'interface (5) est conçue pour établir une connexion avec le dispositif de lecture (2) en vue de lire les données de protocole du capteur stockées dans le dispositif de stockage.

6. Système d'éclairage comprenant au moins un dispositif de commande (1) selon l'une quelconque des revendications 1 à 5 et au moins un dispositif de lecture pour le dispositif de commande, **caractérisé en ce que** le dispositif de lecture présente :
des moyens (7) pour établir la connexion directe et pour lire les données de protocole stockées dans le dispositif de stockage ; et
une unité de commande (10), qui est conçue pour créer ou compléter un protocole sur l'état de fonctionnement du dispositif de commande (1) ou du composant de la technique du bâtiment (1a.. 1e) sur la base des données de protocole lues.

7. Système d'éclairage selon la revendication 6, **caractérisé en ce que** le dispositif de lecture présente :
une mémoire de données pour stocker des informations de service qui sont attribuées à certains défauts de fonctionnement du dispositif de commande (1) ou du composant de la technique du bâtiment (1a..1e) ; et
un affichage (8) pour afficher les informations de service ;
l'unité de commande (10) étant conçue pour déterminer des défauts de fonctionnement du dispositif de commande (1) ou du composant de technique du bâtiment (1a.. 1e) sur la base des données de protocole lues et pour déterminer les informations de service à afficher sur l'affichage (8) sur la base du défaut de fonctionnement déterminé.

8. Système d'éclairage selon la revendication 7, **caractérisé en ce que**
le système d'éclairage comprend une pluralité de dispositifs de commande (1) ;
la mémoire de données est conçue pour stocker une pluralité de protocoles correspondant à la pluralité de dispositifs de commande (1), un protocole étant à chaque fois attribué à un dispositif de commande (1) ou à un composant de la technique du bâtiment (1 a..1e) ; et le dispositif de lecture
comprend une unité d'entrée (9) pour sélectionner le protocole à afficher sur l'affichage (8).

9. Système d'éclairage selon l'une quelconque des revendications 6 à 8, **caractérisé en ce que**
le dispositif de commande (1) est conçu pour commander le composant de la technique du bâtiment (1a..1e) sur la base de données de commande définies et/ou de configurations définies ; et
le dispositif de lecture (2) est conçu pour recevoir ou interroger les données de commande actuellement définies et/ou les informations sur les configurations actuellement définies provenant du dispositif de commande (1).

10. Système d'éclairage selon l'une quelconque des revendications 6 à 9, **caractérisé en ce que**
le dispositif de lecture (2) est conçu pour envoyer, au dispositif de commande (1), des données de commande et/ou des informations sur les configurations à définir pour l'unité de commande (10) du composant de la technique du bâtiment (1a..1e) ; et
le dispositif de commande (1) est conçu pour commander le composant de la technique du bâtiment (1a..1e) sur la base des données de commande reçues et/ou des configurations reçues.

11. Procédé de création d'un protocole de l'état de fonctionnement d'au moins un composant de la technique du bâtiment (1a..1e), le composant de la technique du bâtiment étant un éclairage de secours, comportant les étapes suivantes :
génération de données de protocole par le composant de la technique du bâtiment (1a..1e) par la détection et le stockage de données sur l'état de fonctionnement du composant de la technique du bâtiment à certains moments ;
transmission des données de protocole à un dispositif de lecture (2) au moyen d'une connexion directe entre le composant de la technique du bâtiment (1a.. 1e) et le dispositif de lecture (2) ; et
création du protocole sur la base des données de protocole transmises,
**caractérisé en ce que**
pour la détection des données sur l'état de fonctionnement, un test de fonction et un test de durée de fonctionnement sont effectués à intervalles réguliers sur la base d'un signal temporel généré par un chronomètre ou une horloge interne, l'intervalle entre deux tests de durée de fonctionnement successifs étant plus long que l'intervalle entre deux tests de fonction successifs ; et
les résultats de test et les messages d'erreur de chaque test de fonctionnement et de durée de fonctionnement sont automatiquement stockés dans le dispositif de stockage à la fin du test, un numéro séquentiel unique, la valeur temporelle du signal temporel à la fin du test et/ou la date et/ou l'heure du test étant attribué(e)(s) à chaque test de fonction et de durée de fonctionnement.

12. Procédé selon la revendication 11, **caractérisé en ce que**
deux composants de la technique du bâtiment, ou plus, génèrent respectivement des données de protocole indépendamment les unes des autres selon la revendication 11 ;
les données de protocole générées sont transmises au dispositif de lecture (2) au moyen d'une connexion directe respective ; et
pour chaque composant de la technique du bâtiment (1a..1e), un protocole est créé sur la base des données de protocole respectives.

13. Procédé selon la revendication 13 ou 14, **caractérisé en ce que** le procédé comprend en outre les étapes suivantes :
détermination d'un défaut de fonctionnement du ou de l'un des composant(s) de la technique du bâtiment (1a..1e) sur la base des données de protocole transmises ; et
émission des informations de service associées au défaut de fonctionnement déterminé.
